(19) Europäisches Patentamt
European Patent Office
Office européen des brevets

(11) EP 4 336 417 A1

(12) EUROPEAN PATENT APPLICATION

(43) Date of publication:
**13.03.2024 Bulletin 2024/11**

(21) Application number: **23168693.2**

(22) Date of filing: **19.04.2023**

(51) International Patent Classification (IPC):
***G06N 10/60*** *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.08.2022 JP 2022133785**

(71) Applicant: **FUJITSU LIMITED**
**Kawasaki-shi, Kanagawa 211-8588 (JP)**

(72) Inventor: **ISHIDA, Yuichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

# (54) TEMPERATURE ADJUSTMENT PROGRAM, DATA PROCESSING APPARATUS, AND DATA PROCESSING METHOD

(57) A data processing program that causes at least one computer to execute a process, the process includes for each of a plurality of replica circuits, acquiring a Hamming distance of each of the plurality of replica circuits from a first state at a start of a certain period to a second state changed most, in searching for a solution of an optimization problem; acquiring a minimum value among distances in the certain period in each of the plurality of replica circuits; changing a magnitude of a minimum temperature value among a plurality of temperature values set in each of the plurality of replica circuits based on a comparison between the minimum value and a first threshold; setting the changed minimum temperature value in each of the plurality of replica circuits; and causing the plurality of replica circuits to search for a solution of the optimization problem.

FIG. 1

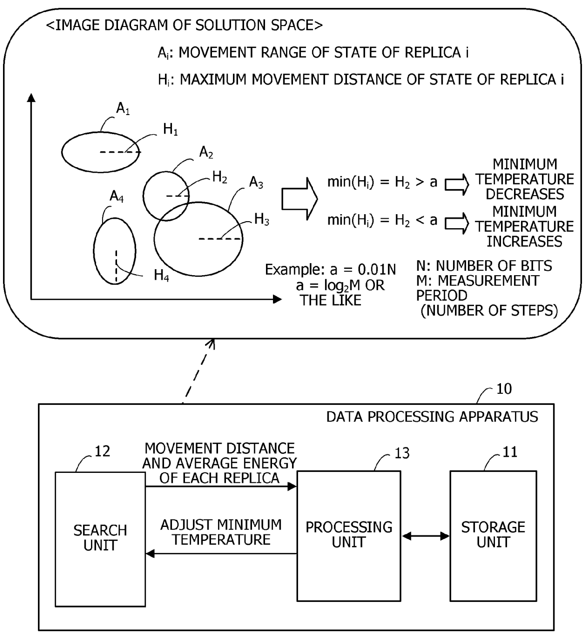


EP 4 336 417 A1

**Description**

FIELD

The embodiments discussed herein are related to a temperature adjustment program, a data processing apparatus, and a data processing method.

BACKGROUND

As an apparatus that calculates a large-scale discrete optimization problem which a Neumann-type computer does not handle well, there is an Ising apparatus (also referred to as a Boltzmann machine) using an Ising-type evaluation function (also referred to as an energy function or the like).

In calculation by the Ising apparatus, a problem of a calculation target is replaced with an Ising model that is a model representing a behavior of a spin of a magnetic body. A search for a state of the Ising model in which a value of the Ising-type evaluation function (corresponding to energy in the Ising model) is minimized is performed by using a Markov-chain Monte Carlo method. A state in which the value of an evaluation function is the minimum value among local minimum values is the optimum solution. By changing a sign of the evaluation function, the Ising apparatus may also search for a state in which the value of the evaluation function is a local maximum.

Hereinafter, the Markov-chain Monte Carlo (MCMC) method is abbreviated as an MCMC method. Processing by the MCMC method may be referred to as MCMC processing. For example, in the MCMC processing, a state transition is accepted with an acceptance probability of the state transition defined by a Metropolis method or a Gibbs method.

As one type of the MCMC method, there is a replica exchange method (also referred to as a parallel tempering method or the like). According to the replica exchange method, the MCMC processing using a plurality of temperature values is performed independently of each other by a plurality of replicas of the Ising model. For each certain number of trials, energies obtained in each MCMC processing are compared with each other, and states for the two temperature values are exchanged with an appropriate probability. Compared with a simulated annealing method in which the temperature value is gradually decreased, the replica exchange method reduces a possibility of being trapped in a local solution and enables an efficient search of an entire solution space (search space).

In the related art, there has been proposed a method of adjusting an interval between the temperature values by using specific heat indicating a degree of change in energy in accordance with a change in temperature in order to increase uniformity of an exchange probability in the replica exchange method. There has been proposed a method for adjusting a temperature of a replica, based on a barycenter of parameters corresponding to states sampled by the MCMC processing.

Japanese Laid-open Patent Publication No. 2021-43503 and Japanese Laid-open Patent Publication No. 2020-181461 are disclosed as related art.

SUMMARY

[TECHNICAL PROBLEM]

At the time of solving an optimization problem by using the replica exchange method, in a case where a minimum temperature value (hereinafter, may also be referred to as a minimum temperature) among a plurality of temperature values is not appropriately set, a time until a solution is obtained may be very long. For example, when the minimum temperature is too low, a state transition accompanied by an increase in energy hardly occurs, and once a local solution is obtained, there is a possibility that it is not possible to escape from the local solution.

However, in order to determine an appropriate minimum temperature, adjustment of the minimum temperature is repeated many times to search for an optimum value, and thus there is a problem that it takes time to adjust the minimum temperature.

In one aspect, an object of the present disclosure is to provide a temperature adjustment program, a data processing apparatus, and a data processing method capable of shortening an adjustment time of a minimum temperature used in a replica exchange method.

[ADVANTAGEOUS EFFECTS OF INVENTION]

In one aspect of the present disclosure, it is possible to shorten the adjustment time of the minimum temperature used in the replica exchange method.

[SOLUTION TO PROBLEM]

According to an aspect of the embodiments, a data processing program that causes at least one computer to execute a process, the process includes for each of a plurality of replica circuits that search for a solution of an optimization problem by a replica exchange method based on an Ising model obtained by converting the optimization problem, acquiring a Hamming distance from a first state to a second state of each of the plurality of replica circuits in the searching for the solution of the optimization problem in a certain period, the first state being a state at a start of the certain period, the second state being a state changed most from the first state in the certain period; acquiring a minimum value among distances in the certain period in each of the plurality of replica circuits; changing a magnitude of a minimum temperature value among a plurality of temperature values set in each of the plurality of replica circuits based on a comparison between the minimum value and a first threshold; setting the changed minimum temperature value in each of the plurality of replica circuits; and causing the plurality of replica circuits to search for a solution of the optimization problem based on the set minimum temperature value.

BRIEF DESCRIPTION OF DRAWINGS

FIG. 1 is a diagram illustrating an example of a data processing apparatus according to a first embodiment;
FIG. 2 is a flowchart illustrating an adjustment procedure of a minimum temperature;
FIG. 3 is a diagram illustrating an example of a data processing apparatus according to a second embodiment;
FIG. 4 is a diagram illustrating an example of a temperature adjustment unit;
FIG. 5 is a diagram illustrating another example of the temperature adjustment unit;
FIG. 6 is a flowchart illustrating an example of a flow of an adjustment procedure of a minimum temperature; and
FIG. 7 is a diagram illustrating an example of hardware of a computer that is an example of the data processing apparatus.

DESCRIPTION OF EMBODIMENTS

Hereinafter, embodiments of the present disclosure will be described with reference to the drawings.

(First Embodiment)

FIG. 1 is a diagram illustrating an example of a data processing apparatus according to a first embodiment.

A data processing apparatus 10 includes a storage unit 11, a search unit 12, and a processing unit 13.

For example, the storage unit 11 is a volatile storage apparatus that is an electronic circuit such as a dynamic random-access memory (DRAM) or a non-volatile storage apparatus that is an electronic circuit such as a hard disk drive (HDD) or a flash memory. The storage unit 11 may include an electronic circuit such as a static random-access memory (SRAM) register.

For example, the storage unit 11 stores information on an optimization problem to be calculated, calculation conditions, and the like. Various programs such as a temperature adjustment program may be stored in the storage unit 11.

For example, the search unit 12 may be implemented by using an electronic circuit such as an application-specific integrated circuit (ASIC) or a field-programmable gate array (FPGA). The search unit 12 may be implemented by software processing in which a processor that is hardware such as a central processing unit (CPU), a graphics processing unit (GPU), or a digital signal processor (DSP) executes a program.

Based on an Ising model obtained by converting the optimization problem to be calculated, the search unit 12 searches for a solution of the optimization problem by a replica exchange method using a plurality of replica circuits each of which performs processing for a replica of the Ising model. For example, a state (ground state) in which the energy of the Ising model is minimum is an optimum solution.

The energy of the Ising model is defined by, for example, an energy function E(x) as indicated by Expression (1) below.

$$E(\boldsymbol{x}) = -\sum_{\langle i,j \rangle}^{N} W_{ij} x_i x_j - \sum_{i=1}^{N} b_i x_i + c \qquad (1)$$

A first term on a right side is a sum obtained by adding up products of values of two state variables and a weight coefficient without missing and overlapping for all combinations of the two state variables selectable from all state variables included in the Ising model. $x_i$ is an i-th state variable. $x_j$ is a j-th state variable. $W_{ij}$ is a weight coefficient indicating a weight (for example, strength of coupling) between the i-th state variable and the j-th state variable.

A second term on the right side is a sum of products of a bias coefficient of each of all the state variables and a value of the state variable. $b_i$ indicates a bias coefficient for the i-th state variable.

For example, "-1" of a spin in the Ising model corresponds to a value "0" of the state variable. "+1" of a spin in the Ising model corresponds to a value "1" of the state variable. Therefore, the state variable may also be referred to as a bit taking a value of 0 or 1.

Based on a comparison result between an energy change amount caused when any one bit of a plurality of bits is changed and a thermal noise value, the search unit 12 determines whether to allow the change of the bit. When the search unit 12 determines to allow the change of the bit, the value of the bit is changed to cause a state transition. Hereinafter, changing the value of the bit is referred to as a flip. The thermal noise value is obtained based on a temperature value set for each replica and a random number value. As the temperature value increases, an amplitude of the thermal noise value increases.

When the replica exchange method is performed, temperature values different from each other are set between a maximum temperature and a minimum temperature for each of the replicas. MCMC processing, which is processing for determining whether to allow the above-described flip of the bit, performing the state transition, and the like, is repeated in each replica, and a state (or temperature) exchange is performed between the replicas with a predetermined exchange probability.

For example, the search unit 12 may update the energy every time the state transition is performed in each replica circuit and output, as a solution, the state at the time when the minimum energy is obtained in all the replicas among the energies obtained through the repeated processing performed a predetermined number of times.

The search unit 12 of the data processing apparatus 10 according to the present embodiment calculates a movement distance from a state at a start of a predetermined period in search processing for a solution of an optimization problem in each of the plurality of replica circuits. The movement distance may be represented by a Hamming distance. For example, the Hamming distance between a state $X^{(a)}$ and a state $X^{(b)}$ of N bits is represented by Expression (2) below.

$$\sum_{i=1}^{N} \left| x_i^{(a)} - x_i^{(b)} \right| \qquad (2)$$

$x_i^{(a)}$ represents the i-th state variable of the state $X^{(a)}$, and $x_i^{(b)}$ represents the i-th state variable of the state $X^{(b)}$.

For example, the movement distance is calculated every time the above-described MCMC processing is performed or every time a state transition occurs.

The search unit 12 may calculate an average value (hereinafter, referred to as average energy) of energies in the above-described predetermined period in each of the plurality of replica circuits.

For example, the processing unit 13 may be implemented by software processing in which a processor that is hardware such as a CPU, a GPU, or a DSP executes a program such as the temperature adjustment program stored in the storage unit 11. The processing unit 13 may be implemented by using an electronic circuit such as an ASIC or an FPGA.

The processing unit 13 has a function of adjusting the minimum temperature that is a minimum value among a plurality of temperature values used for solution search by the replica exchange method.

FIG. 2 is a flowchart illustrating an adjustment procedure of the minimum temperature.

Step S10: The processing unit 13 acquires, from the search unit 12, a distance (hereinafter, referred to as a maximum movement distance) from a state at the start of a predetermined period (hereinafter, referred to as a measurement period) in search processing for a solution of an optimization problem to a state moved most in each of the plurality of replica circuits. For example, the distance between the states is acquired every time the MCMC processing is performed.

Step S11: The processing unit 13 detects a minimum value among the maximum movement distances of the movement distances in the measurement period in each of the plurality of replica circuits. In FIG. 2, the maximum movement distance is denoted by $H_i$, and the above-described minimum value is denoted by $\min(H_i)$.

Step S12: The processing unit 13 changes the minimum temperature based on a comparison result between the minimum value and a predetermined threshold.

Step S13: The processing unit 13 sets the minimum temperature after the change in the search unit 12.

In step S12, the predetermined threshold is, for example, a movement distance requested in the measurement period. For example, the threshold is input by a user in accordance with the optimization problem to be calculated. As a method of determining the threshold, a method of designating a predetermined ratio of the number of bits N is conceivable. For example, in a case where 1% of all bits are desired to be moved in the measurement period, 0.01N is designated as the threshold.

The processing unit 13 may use $a = \log_2 M$ as a threshold a by using a number of steps M representing the measurement period. The number of steps is the number of repetitions of the MCMC processing.

$a = \log_2 M$ is used when it is desired that all the states to be taken during the M steps are different from each other. To make the solution search efficient, in the calculation of the optimization problem, it is desirable that the state does not return to the state that has been reached once. However, there are various ways of taking a state during the M steps, and that situation is also implemented by, for example, sequentially flipping different M bits.

However, the state is at a bottom of an energy landscape when a movement range at a low temperature is considered. It is rare that the bottom of the energy landscape is formed in such a manner that different M bits are sequentially flipped, and in many cases, there is a tendency that the different M bits are aggregated to some extent (movement distance is short). Because it is difficult to incorporate this aggregation state and it is not strictly considered, when it is simply considered and assumed that all the states are the closest to each other, an approximate value of the maximum value of the distance between each of M states at this time is $\log_2 M$ described above.

FIG. 1 illustrates an image diagram of a solution space that may be taken by a state of each replica.

$A_1$ to $A_4$ indicate movement ranges, in the solution space, of the states of four replicas (replica i (i = 1 to 4)) in the measurement period. $H_1$ to $H_4$ indicate the maximum movement distances of the four replicas. A minimum value ($\min(H_i)$) among the maximum movement distances is $\min(H_i) = H_2$ in the example illustrated in FIG. 1.

Thus, in the processing of step S12, the processing unit 13 changes the minimum temperature based on the comparison result between $H_2$ and the threshold a. When $H_2 > a$ holds, the processing unit 13 decreases the minimum temperature (decreases the minimum temperature value). When $H_2 < a$ holds, the processing unit 13 increases the minimum temperature (increases the minimum temperature value). When $\min(H_i) = a$, the processing unit 13 does not have to adjust the minimum temperature.

For example, in the processing of step S12, the processing unit 13 calculates a new minimum temperature in accordance with Expression (3) below.

$$T_{min,new} = T_{min,old}\left(1 + \frac{a - min(H_i)}{N}\right) \quad (3)$$

In Expression (3), $T_{min,new}$ is the new minimum temperature, and $T_{min,old}$ is a minimum temperature before the change. As in Expression (3), the minimum temperature is adjusted by a magnitude corresponding to a difference between $\min(H_i)$ and the threshold a.

When the minimum temperature increases, the number of state transitions accompanied by the increase in energy increases. Thus, it is considered that the movement distance in the above-described measurement period increases. Accordingly, $\min(H_i)$ also increases. For example, in a case where the new minimum temperature is determined by Expression (3), it is considered that $\min(H_i)$ approaches the threshold a in a next measurement period.

In a case where the search unit 12 calculates average energy in the above-described measurement period in each of the plurality of replica circuits, the processing unit 13 acquires the average energy. For example, the processing unit 13 detects the number of replica circuits r that have the average energy whose difference from the average energy of the replica circuit in which the minimum temperature is set (hereinafter, referred to as a minimum temperature replica circuit) is less than a predetermined threshold (for example, 1). The processing unit 13 calculates a new minimum temperature in accordance with Expression (4) below.

$$T_{min,new} = T_{min,old}\left(1 + \frac{r}{n}\right) \quad (4)$$

In Expression (4), n is the number of all replica circuits.

When there are a large number of replica circuits in which the average energy hardly changes from the average energy of the minimum temperature replica circuit, a large movement distance may be taken at an arbitrary temperature. Thus, there is a possibility that the minimum temperature excessively decreases. Accordingly, in a case where there is a replica circuit that has the average energy whose difference from that of the minimum temperature replica circuit is less than a predetermined threshold, the processing unit 13 determines that the plurality of replica circuits repeat an iso-energy transition. By increasing the minimum temperature according to Expression (4) above in accordance with the number of corresponding replica circuits r, the processing unit 13 may suppress the excessive decrease in the minimum temperature.

In the processing of step S13, the processing unit 13 sets the (newly generated) minimum temperature changed as described above in the search unit 12.

For each replica circuit, the search unit 12 sets temperature values different from each other between the maximum temperature and the minimum temperature after the change, and repeats the search processing as described above. The search unit 12 may repeatedly calculate the movement distance and the average energy. In this case, the processing unit 13 also repeats the adjustment of the minimum temperature.

According to the data processing apparatus 10 of the first embodiment as described above, the processing unit 13 adjusts the minimum temperature, based on the comparison result between the threshold and the minimum value among the maximum movement distances of the respective replica circuits in the solution space in the predetermined period (measurement period). Accordingly, since adjustment reflecting the search status of the solution may be performed, an adjustment time for obtaining an appropriate minimum temperature may be shortened.

(Second Embodiment)

FIG. 3 is a diagram illustrating an example of a data processing apparatus according to a second embodiment.

A data processing apparatus 20 according to the second embodiment includes a search unit 21, a temperature adjustment unit 22a, and an overall control unit 23. The search unit 21 is an example of the search unit 12 illustrated in FIG. 1, and the temperature adjustment unit 22a and the overall control unit 23 are an example of the processing unit 13 illustrated in FIG. 1. An element corresponding to the storage unit 11 illustrated in FIG. 1 is not illustrated.

For example, the search unit 21 may be implemented by using an electronic circuit such as an ASIC or an FPGA. For example, the temperature adjustment unit 22a and the overall control unit 23 may be implemented by software processing in which a processor such as a CPU executes a program. The implementation is not limited to this, and a part or entirety of each of the search unit 21, the temperature adjustment unit 22a, and the overall control unit 23 may be implemented by using an electronic circuit as described above. A part or entirety of each of the search unit 21, the temperature adjustment unit 22a, and the overall control unit 23 may be implemented by software processing.

In the data processing apparatus 20 according to the second embodiment, the search unit 21 searches for a solution of an optimization problem by a replica exchange method.

For example, as illustrated in FIG. 3, the search unit 21 includes replica circuits 21a1, 21a2, ..., and 21an each corresponding to a replica. The search unit 21 further includes a temperature control unit 21b.

Temperature values ($T_1$ to $T_n$) different from each other are set for the replica circuits 21a1 to 21an. For example, the initial $T_1$ to $T_n$ are determined based on Expressions (5) and (6) below, based on a maximum temperature ($T_{max}$) and a minimum temperature ($T_{min}$) given in advance.

$$T_i = T_{min} \cdot exp\left(\frac{i-1}{denom}\right) \tag{5}$$

$$denom = \frac{n-1}{\log\left(\frac{T_{max}}{T_{min}}\right)} \tag{6}$$

In Expression (5), $T_i$ is a temperature value set for the i-th replica circuit among the replica circuits 21a1 to 21an. In Expression (6), n is the number of replica circuits 21a1 to 21an (the number of replicas).

Each of the replica circuits 21a1 to 21an implements solution search based on the energy function represented by Expression (1) by using, for example, a circuit as described below. Hereinafter, the replica circuit 21a1 will be mainly described but the replica circuits 21a2 to 21an may be implemented by the same circuit configuration.

The replica circuit 21a1 includes bit flip availability determination units 30a1, 30a2, ..., and 30aN, a selector unit 30b, a state holding unit 30c, a Hamming distance calculation unit 30d, and an average energy calculation unit 30e.

Processing of determining availability of flipping each bit included in the state of the replica and flipping any bit determined to be flippable corresponds to one-time processing of the MCMC processing by the replica circuit 21a1. The one-time processing is repeatedly executed. Hereinafter, the number of repetitions of the one-time processing executed in parallel by the replica circuits 21a1 to 21an may be referred to as the number of steps.

Each of the bit flip availability determination units 30a1 to 30aN is an arithmetic processing circuit that determines availability of flipping related to one bit handled by itself. The bit flip availability determination units 30a1 to 30aN perform the above-described determination processing in parallel.

When the value of the bit (state variable $x_i$) with index = i changes to 1 - $x_i$, a change amount of $x_i$ may be represented as $\delta x_i = (1 - x_i) - x_i = 1 - 2x_i$. Accordingly, the energy change amount ($\Delta E_i$) accompanied by the change in the value of $x_i$ may be represented by Expression (7) below from Expression (1).

$$\begin{aligned} \Delta E_i &= E(\boldsymbol{x})\Big|_{x_i \to 1 - x_i} - E(\boldsymbol{x}) \\ &= -\delta x_i \left( \sum_j W_{ij} x_j + b_i \right) \\ &= -\delta x_i h_i \\ &= \begin{cases} -h_i & for\ x_i = 0 \to 1 \\ +h_i & for\ x_i = 1 \to 0 \end{cases} \end{aligned} \tag{7}$$

In Expression (7), $h_i$ may be represented by Expression (8) below.

$$h_i = \sum_j W_{ij} x_j + b_i \tag{8}$$

Each of the bit flip availability determination units 30a1 to 30aN holds $h_i$ for $x_i$, and obtains, from $h_i$, $\Delta E_i$ in a case where the value of $x_i$ is changed, based on Expression (7).

Hereinafter, the bit flip availability determination unit 30a1 will be mainly described as an example. The bit flip availability determination units 30a2 to 30aN having the configuration of the same name have the same function.

The bit handled by the bit flip availability determination unit 30a1 is referred to as an own bit, and the bits handled by the bit flip availability determination units 30a2 to 30aN are referred to as other bits.

The bit flip availability determination unit 30a1 stores weight coefficients ($W_{1j}$ (j = 1 to N)) between the own bit and the other bits. The subscript "j" of $W_{1j}$ indicates index of one of the bits including the own bit (bit with index = 1). $W_{11} = 0$ holds.

The bit flip availability determination unit 30a1 uses $W_{1j}$ to calculate $h_1$ based on Expression (8).

By using $h_1$, the bit flip availability determination unit 30a1 generates $\Delta E_1$ generated in a case where the own bit is flipped, based on Expression (7). For example, the bit flip availability determination unit 30a1 may determine whether the value of the own bit changes to 0 or 1 from the current value of the own bit supplied from the state holding unit 30c. The bit flip availability determination unit 30a1 outputs the generated $\Delta E_1$ to the average energy calculation unit 30e.

The bit flip availability determination unit 30a1 determines availability of flipping the own bit, based on the comparison result between $\Delta E_1$ and a thermal noise value. As the thermal noise value, for example, $T_1 \cdot \log(u)$ may be used. $T_1$ is a temperature value set for the replica circuit 21a1, and u is a uniform random number taking a value from 0 to 1. The bit flip availability determination unit 30a1 permits the flip when, for example, $-\Delta E_1 \geq T \cdot \log(u)$ holds.

The selector unit 30b receives the determination result of the flip availability output by each of the bit flip availability determination units 30a1 to 30aN. When there are a plurality of bits determined to be flippable, the selector unit 30b selects one of the plurality of bits randomly or according to a predetermined rule. The selector unit 30b outputs index = j of the selected bit to each of the bit flip availability determination units 30a1 to 30aN, and outputs index = j and a flip instruction signal (update) to the state holding unit 30c.

For example, the state holding unit 30c includes a register and holds a state ($X_1$ ($x_1$, $x_2$, ..., and $x_N$)) of the replica in the replica circuit 21a1. Based on update and index = j, when the selector unit 30b selects any one of the bits determined to be flippable, the state holding unit 30c flips the bit. The state holding unit 30c outputs, to the temperature adjustment unit 22a and the overall control unit 23, $X_1$ when the search processing in the replica circuit 21a1 is completed for a predetermined number of times or for a predetermined period.

The Hamming distance calculation unit 30d acquires the state $X_1$ at the start of the predetermined measurement period from the state holding unit 30c and holds it. Every time the MCMC processing is repeated in the measurement period, the Hamming distance calculation unit 30d acquires $X_1$ from the state holding unit 30c, calculates a movement distance (Hamming distance) $h_{1,m}$ from $X_1$ at the start, and outputs the movement distance to the temperature adjustment unit 22a. The Hamming distance may be calculated based on Expression (2).

The average energy calculation unit 30e calculates average energy $E_{1,ave}$ and outputs the average energy $E_{1,ave}$ to the temperature adjustment unit 22a. For example, the average energy calculation unit 30e acquires the state $X_1$ at the start of the measurement period from the state holding unit 30c, and calculates energy based on Expression (1). Every time the MCMC processing is repeated, the average energy calculation unit 30e acquires an energy change amount generated by flipping of the bit from any of the bit flip availability determination units 30a1 to 30aN, and updates the average energy $E_{1,ave}$ by using the energy change amount.

The temperature control unit 21b sets T (any of $T_1$ to $T_n$) in the bit flip availability determination unit included in each of the replica circuits 21a1 to 21an. When $T_{min}$ is updated by the temperature adjustment unit 22a, the temperature control unit 21b updates $T_1$ to $T_n$ in accordance with Expressions (5) and (6) based on $T_{max}$ set in advance and $T_{min}$ after the update, and sets new $T_1$ to $T_n$ in the replica circuits 21a1 to 21an.

The temperature control unit 21b controls the exchange of T (temperature exchange) in the replica circuits 21a1 to 21an. Based on an exchange probability ($p_{ij}$) represented by Expression (9) below, the temperature control unit 21b determines for each pair of replica circuits having adjacent temperature values (a pair of two replica circuits) whether to perform temperature exchange.

$$p_{ij} = \exp\left((E_i - E_j)\left(\frac{1}{kT_i} - \frac{1}{kT_j}\right)\right) \tag{9}$$

In Expression (9), $E_i$ is energy corresponding to the state of the i-th replica circuit among the replica circuits 21a1 to 21an. $E_j$ is energy corresponding to the state of the j-th replica circuit. $T_i$ is a temperature value set for the i-th replica circuit. $T_j$ is a temperature value set for the j-th replica circuit. k is a Boltzmann constant.

The temperature control unit 21b sets the temperature value after the exchange in each of the replica circuits 21a1 to 21an.

In the above description, the search unit 21 exchanges the temperature value among the replica circuits 21a1 to 21an, but may exchange the state with the probability of Expression (9). However, exchanging the temperature value involves a smaller amount of information to be transmitted and received than exchanging the state.

The temperature adjustment unit 22a adjusts the minimum temperature $T_{min}$, based on the movement distances $h_{1,m}$, $h_{2,m}$, ..., and $h_{n,m}$ and the average energies $E_{1,ave}$, $E_{2,ave}$, ..., and $E_{n,ave}$ output by the replica circuits 21a1 to 21an, respectively. An example of the temperature adjustment unit will be described later.

The overall control unit 23 controls overall operations of the data processing apparatus 20. Upon receiving input of an activation signal from an outside of the data processing apparatus 20, the overall control unit 23 outputs the activation signal to the temperature control unit 21b, activates the search unit 21, and starts the search processing for the solution of the optimization problem. When the search processing by the search unit 21 ends, the overall control unit 23 acquires $X_1$ to $X_n$ from the search unit 21 and obtains the solution for the optimization problem. For example, the overall control unit 23 sets, as the solution, the state corresponding to the minimum energy among the acquired $X_1$ to $X_n$. The overall control unit 23 outputs an end signal indicating an end of the arithmetic operation to the outside of the data processing apparatus 20. The end signal may include information indicating the solution obtained by the arithmetic operation. For example, the overall control unit 23 may output image information indicating the solution to a display apparatus (not illustrated) coupled to the data processing apparatus 20 and causes the display apparatus to display the image information indicating the solution to present details of the obtained solution to the user.

The overall control unit 23 may receive problem information ($W_{ij}$ or bi) described above stored in a storage unit (not illustrated), an initial value of the state, and the like, and may set them in each unit of the search unit 21. The overall control unit 23 may receive an initial value of $T_{min}$ or $T_{max}$ from the outside of the data processing apparatus 20 and set it in the temperature control unit 21b. The setting of these pieces of information may be performed by another control unit.

Upon receiving input of a reset signal from the outside of the data processing apparatus 20, the overall control unit 23 clears information held by the search unit 21 and the temperature adjustment unit 22a.

(Example of Temperature Adjustment Unit 22a)

FIG. 4 is a diagram illustrating an example of the temperature adjustment unit.

The temperature adjustment unit 22a includes a maximum movement distance holding unit 40, a minimum value detection unit 41, an iso-energy transition replica number detection unit 42, a parameter acquisition unit 43, and a minimum temperature adjustment unit 44.

From $h_{1,m}$ to $h_{n,m}$ output by the replica circuits 21a1 to 21an, the maximum movement distance holding unit 40 acquires and holds the maximum movement distances $H_1$ to $H_n$ in the measurement period of each of the plurality of replicas. In this example, the maximum movement distance holding unit 40 indirectly acquires the maximum movement distances $H_1$ to $H_n$ from the replica circuits 21a1 to 21an. The replica circuits 21a1 to 21an may obtain the maximum movement distances $H_1$ to $H_n$, and in such a case, the maximum movement distance holding unit 40 directly acquires the maximum movement distances $H_1$ to $H_n$ from the replica circuits 21a1 to 21an.

The minimum value detection unit 41 detects a minimum value among $H_1$ to $H_n$, for example, $min(H_i)$.

The iso-energy transition replica number detection unit 42 acquires $E_{1,ave}$ to $E_{n,ave}$, and detects the number of replicas r that have the average energy whose difference from the average energy of the minimum temperature replica is less than a predetermined threshold (for example, 1).

For example, the parameter acquisition unit 43 acquires the threshold a input by the user and the number of steps M representing the measurement period.

By using the threshold a, $min(H_i)$ at the end of the measurement period (at the end of the MCMC processing with the number of steps M), and the number of replicas r described above, the minimum temperature adjustment unit 44 adjusts (changes) $T_{min}$ in accordance with Expressions (3) and (4) and sets $T_{min}$ in the search unit 21.

FIG. 5 illustrates another example of the temperature adjustment unit. In FIG. 5, the same elements as the elements illustrated in FIG. 4 are denoted by the same reference signs.

A temperature adjustment unit 22b includes a threshold calculation unit 45. In the temperature adjustment unit 22b in FIG. 5, the parameter acquisition unit 43 does not acquire the threshold a, and the threshold calculation unit 45 calculates $a = log_2M$ from the number of steps M as described above. The minimum temperature adjustment unit 44 adjusts $T_{min}$ by using the threshold a calculated by the threshold calculation unit 45.

FIG. 6 is a flowchart illustrating an example of a flow of an adjustment procedure of the minimum temperature.

For example, the following processing is performed under the control of the overall control unit 23.

The temperature adjustment unit 22a or 22b acquires the number of steps M and the threshold a (step S20). In a case of the temperature adjustment unit 22b as illustrated in FIG. 5, the threshold a does not have to be acquired.

The temperature adjustment unit 22a or 22b sets i = 1 (step S21) and performs initialization such that m = 1 and $H_i = 0$ (step S22). After that, processing of step S23 is performed.

In the processing of step S23, the Hamming distance calculation unit of the replica circuit that performs processing of the i-th replica (hereinafter, referred to as a replica i) among the replica circuits 21a1 to 21an of the search unit 21 acquires a current state of the replica i (state at the start of the measurement period) as $X_{i,1}$. The average energy calculation unit of that replica circuit calculates energy of the replica i as $E_{i,ave}$ based on $X_{i,1}$.

After that, the MCMC processing is performed in the search unit 21 (step S24). Accordingly, the state of each replica is updated in accordance with the acceptance probability of the predetermined state transition. The Hamming distance calculation unit of the replica circuit that performs processing of the replica i calculates a movement distance $h_{i,m}$ between the current state of the replica i and $X_{i,1}$ (step S25). The temperature adjustment unit 22a or 22b acquires $h_{i,m}$.

When $h_{i,m}$ is the maximum among $h_{i,m}$ for the replica i, the temperature adjustment unit 22a or 22b updates $H_i$ with $h_{i,m}$ and holds $H_i$ (step S26). This processing corresponds to calculation of $H_i = max(H_i, h_{i,m})$.

The average energy calculation unit of the replica circuit that performs processing of the replica i obtains average energy of the replica i and updates $E_{i,ave}$ (step S27).

The temperature adjustment unit 22a or 22b sets m = m + 1 (step S28), and determines whether $m \leq M + 1$ holds (step S29). When it is determined that $m \leq M + 1$ holds, the processing from step S24 is repeated.

When it is determined that $m \leq M + 1$ does not hold, the temperature adjustment unit 22a or 22b sets i = 1 + 1 (step S30) and determines whether $i \leq n + 1$ holds (step S31). When it is determined that $i \leq n + 1$ holds, the processing from step S22 is repeated.

When it is determined that $i \leq n + 1$ does not hold, processing of step S32 is performed.

In the processing of step S32, the temperature adjustment unit 22a or 22b acquires $E_{1,ave}$ to $E_{n,ave}$, and detects the number of replicas r (denoted by an iso-energy transition replica in FIG. 6) that have the average energy whose difference from the average energy of the minimum temperature replica is less than a predetermined threshold.

The temperature adjustment unit 22a or 22b determines whether r > 0 holds (step S33). The temperature adjustment unit 22a or 22b performs processing of step S35 when it is determined that r > 0 holds, and performs processing of step S34 when it is determined that r > 0 does not hold.

In the processing of step S34, the temperature adjustment unit 22a or 22b detects the minimum value $min(H_i)$ among $H_i$ for all the replicas, and determines whether $a > min(H_i)$ holds. The temperature adjustment unit 22a or 22b performs the processing of step S35 when it is determined that $a > min(H_i)$ holds, and performs processing of step S36 when it is determined that $a > min(H_i)$ does not hold.

In the processing of steps S35 and S36, the temperature adjustment unit 22a or 22b adjusts the minimum temperature and sets a new minimum temperature in the search unit 21. In the case of $a = min(H_i)$, the current minimum temperature may be maintained without adjusting the minimum temperature.

By adjusting the minimum temperature in the processing of step S35, the minimum temperature increases. By adjusting the minimum temperature in the processing of step S36, the minimum temperature decreases. Although the new minimum temperature is calculated in accordance with Expression (3) described above, in the processing of step S35 in the case of $r > 0$, the new minimum temperature is calculated in accordance with Expression (4) described above.

Accordingly, the one-time adjustment processing of the minimum temperature ends. By repeating the processing of steps S21 to S36 as described above, the minimum temperature may be adjusted to a more appropriate minimum temperature.

The procedure of the processing described above is an example, and the processing order may be appropriately changed.

The data processing apparatus 20 according to the second embodiment described above produces similar effects to those of the data processing apparatus 10 according to the first embodiment. For example, since the adjustment reflecting the search status of the solution may be performed, the adjustment time for obtaining an appropriate minimum temperature may be shortened.

(Experimental Example)

Hereinafter, a description will be given of a result obtained by using the data processing apparatus 20 as illustrated in FIG. 3 to obtain the solutions of G22 and G39 of Gset, which is a benchmark problem of a maximum cut problem as an example of the optimization problem, in a running time of 5 minutes. It is known that energy of the optimum solution of G22 is -13359, and energy of the optimum solution of G39 is -10299.

An average value of the minimum energies in the respective replicas obtained by using the data processing apparatus 20 was -13334.2 in the case of G22 and was -13352.0 in the case of G39.

As a comparative example, as a result of obtaining the solutions of G22 and G39 of Gset in a running time of 5 minutes by a method in which the minimum temperature is not adjusted, the average value of the minimum energies was -13324.8 in the case of G22 and was -10034.4 in the case of G39. Thus, the data processing apparatus 20 obtained lower energy than in the comparative example by 9.4 in G22 and by 14.6 in G39, and better solutions were obtained. For example, it has been found that the effect of adjusting the minimum temperature as described above is obtained.

(Example of Implementation by Computer)

Details of the above-described processing (for example, FIG. 2 or 6) performed by the data processing apparatus 10 or 20 illustrated in FIG. 1 or 3 may be implemented by software by causing a computer as described below to execute a program.

The program may be recorded on a computer-readable recording medium. As the recording medium, for example, a magnetic disk, an optical disk, a magneto-optical disk, a semiconductor memory, or the like may be used. Examples of the magnetic disk include a flexible disk (FD) and an HDD. Examples of the optical disk include a compact disc (CD), a CD-recordable (R)/rewritable (RW), a digital versatile disc (DVD), and a DVD-R/RW. The program may be recorded in a portable-type recording medium and distributed. In such a case, the program may be copied from the portable-type recording medium to another recording medium and executed.

FIG. 7 is a diagram illustrating an example of hardware of a computer that is an example of the data processing apparatus.

A computer 50 includes a processor 51, a RAM 52, an HDD 53, a GPU 54, an input interface 55, a medium reader 56, and a communication interface 57. The processor 51, the RAM 52, the HDD 53, the GPU 54, the input interface 55, the medium reader 56, and the communication interface 57 described above are coupled to a bus.

For example, the processor 51 may function as the search unit 12 and the processing unit 13 in FIG. 1, and as the search unit 21, the temperature adjustment unit 22a, and the overall control unit 23 in FIG. 3. The processor 51 is a processor such as a GPU or a CPU including an arithmetic circuit for executing instructions of a program and a storage circuit such as a cache memory. The processor 51 loads at least a part of a program and data stored in the HDD 53 into the RAM 52 and executes the program. For example, as illustrated in FIG. 3, the processor 51 may include a plurality of processor cores in order to execute the functions of the replica circuits 21a1 to 21an in parallel. The computer 50 may include a plurality of processors. A set of the plurality of processors (multiprocessor) may be referred to as a "processor".

For example, the RAM 52 functions as the storage unit 11 illustrated in FIG. 1. The RAM 52 is a volatile semiconductor memory that temporarily stores the program to be executed by the processor 51 and data to be used for the arithmetic operation by the processor 51. The computer 50 may include a type of memory other than the RAM 52 and may include a plurality of memories.

The HDD 53 is a non-volatile storage apparatus that stores a software program such as an operating system (OS), middleware, or application software, and data. Examples of the program include a program for causing the computer 50 to execute the processing of searching for the solution of the optimization problem and the adjustment processing of the minimum temperature as described above. The computer 50 may include other types of storage apparatuses such as a flash memory or a solid-state drive (SSD) and may include a plurality of non-volatile storage apparatuses.

According to an instruction from the processor 51, the GPU 54 outputs an image (for example, an image representing a search result or the like of the solution of the optimization problem) to a display 54a coupled to the computer 50. As the display 54a, a cathode ray tube (CRT) display, a liquid crystal display (LCD), a plasma display panel (PDP), an organic electroluminescence (OEL) display, or the like may be used.

The input interface 55 acquires an input signal from an input device 55a coupled to the computer 50 and outputs the input signal to the processor 51. As the input device 55a, a pointing device such as a mouse, a touch panel, a touch pad, or a trackball, a keyboard, a remote controller, a button switch, and the like may be used. A plurality of types of input devices may be coupled to the computer 50.

The medium reader 56 is a reading apparatus that reads a program or data recorded on a recording medium 56a. As the recording medium 56a, for example, a magnetic disk, an optical disk, a magneto-optical disk (MO), a semiconductor memory, or the like may be used. Examples of the magnetic disk include an FD and an HDD. Examples of the optical disk include a CD and a DVD.

For example, the medium reader 56 copies a program or data read from the recording medium 56a to another recording medium such as the RAM 52 or the HDD 53. For example, the read program is executed by the processor 51. The recording medium 56a may be a portable-type recording medium or may be used to distribute the program or data. The recording medium 56a or the HDD 53 may be referred to as a computer-readable recording medium.

The communication interface 57 is an interface that is coupled to a network 57a and communicates with another information processing apparatus via the network 57a. The communication interface 57 may be a wired communication interface coupled to a communication apparatus such as a switch via a cable or may be a wireless communication interface coupled to a base station via a wireless link.

An accelerator card including an electronic circuit such as an FPGA or an ASIC may be coupled the bus of the computer 50. The processing of the search units 12 and 21 may be executed by the accelerator card.

Although aspects of the temperature adjustment program, the data processing apparatus, and the data processing method of the present disclosure have been described thus far based on the embodiments, these are merely examples and are not limited to the above description.

## Claims

**1.** A data processing program that causes at least one computer to execute a process, the process comprising:

for each of a plurality of replica circuits that search for a solution of an optimization problem by a replica exchange method based on an Ising model obtained by converting the optimization problem, acquiring a Hamming distance from a first state to a second state of each of the plurality of replica circuits in the searching for the solution of the optimization problem in a certain period, the first state being a state at a start of the certain period, the second state being a state changed most from the first state in the certain period;
acquiring a minimum value among distances in the certain period in each of the plurality of replica circuits;
changing a magnitude of a minimum temperature value among a plurality of temperature values set in each of the plurality of replica circuits based on a comparison between the minimum value and a first threshold;
setting the changed minimum temperature value in each of the plurality of replica circuits; and
causing the plurality of replica circuits to search for a solution of the optimization problem based on the set minimum temperature value.

**2.** The data processing program according to claim 1, wherein the process further comprising:

decreasing the minimum temperature value by a magnitude corresponding to a difference between the minimum value and the first threshold when the minimum value is larger than the first threshold; and
increasing the minimum temperature value by a magnitude corresponding to the difference when the minimum value is smaller than the first threshold.

**3.** The data processing program according to claim 1, wherein the process further comprising:

acquiring an average value of energies of each of the plurality of replica circuits in the certain period;
detecting a number of replica circuits of the plurality of replica circuits that have an energy whose difference from an energy of a replica circuit in which the minimum temperature value is set among the plurality of replica circuits is less than a second threshold; and

increasing the minimum temperature value based on the number when the number is larger than 0.

**4.** The data processing program according to claim 1, wherein the first threshold is a binary logarithm of a value that represents the certain period.

**5.** A data processing apparatus comprising:

a plurality of replica circuits that search for a solution of an optimization problem by a replica exchange method based on an Ising model obtained by converting the optimization problem;
a control unit configured to:

for each of the plurality of replica circuits, acquire a Hamming distance from a first state to a second state of each of the plurality of replica circuits in the searching for the solution of the optimization problem in a certain period, the first state being a state at a start of the certain period, the second state being a state changed most from the first state in the certain period,
acquire a minimum value among distances in the certain period in each of the plurality of replica circuits,
change a magnitude of a minimum temperature value among a plurality of temperature values set in each of the plurality of replica circuits based on a comparison between the minimum value and a first threshold,
set the changed minimum temperature value in each of the plurality of replica circuits, and
cause the plurality of replica circuits to search for a solution of the optimization problem based on the set minimum temperature value.

**6.** The data processing apparatus according to claim 5, wherein the control unit is further configured to:

decrease the minimum temperature value by a magnitude corresponding to a difference between the minimum value and the first threshold when the minimum value is larger than the first threshold, and
increase the minimum temperature value by a magnitude corresponding to the difference when the minimum value is smaller than the first threshold.

**7.** The data processing apparatus according to claim 5, wherein the control unit is further configured to:

acquire an average value of energies of each of the plurality of replica circuits in the certain period,
detect a number of replica circuits of the plurality of replica circuits that have an energy whose difference from an energy of a replica circuit in which the minimum temperature value is set among the plurality of replica circuits is less than a second threshold, and
increase the minimum temperature value based on the number when the number is larger than 0.

**8.** The data processing apparatus according to claim 5, wherein the first threshold is a binary logarithm of a value that represents the certain period.

**9.** A data processing method for a computer to execute a process comprising:

for each of a plurality of replica circuits that search for a solution of an optimization problem by a replica exchange method based on an Ising model obtained by converting the optimization problem, acquiring a Hamming distance from a first state to a second state of each of the plurality of replica circuits in the searching for the solution of the optimization problem in a certain period, the first state being a state at a start of the certain period, the second state being a state changed most from the first state in the certain period;
acquiring a minimum value among distances in the certain period in each of the plurality of replica circuits;
changing a magnitude of a minimum temperature value among a plurality of temperature values set in each of the plurality of replica circuits based on a comparison between the minimum value and a first threshold;
setting the changed minimum temperature value in each of the plurality of replica circuits; and
causing the plurality of replica circuits to search for a solution of the optimization problem based on the set minimum temperature value.

**10.** The data processing method according to claim 9, wherein the process further comprising:

decreasing the minimum temperature value by a magnitude corresponding to a difference between the minimum value and the first threshold when the minimum value is larger than the first threshold; and

increasing the minimum temperature value by a magnitude corresponding to the difference when the minimum value is smaller than the first threshold.

**11.** The data processing method according to claim 9, wherein the process further comprising:

acquiring an average value of energies of each of the plurality of replica circuits in the certain period;
detecting a number of replica circuits of the plurality of replica circuits that have an energy whose difference from an energy of a replica circuit in which the minimum temperature value is set among the plurality of replica circuits is less than a second threshold; and
increasing the minimum temperature value based on the number when the number is larger than 0.

**12.** The data processing method according to claim 9, wherein the first threshold is a binary logarithm of a value that represents the certain period.

FIG. 1

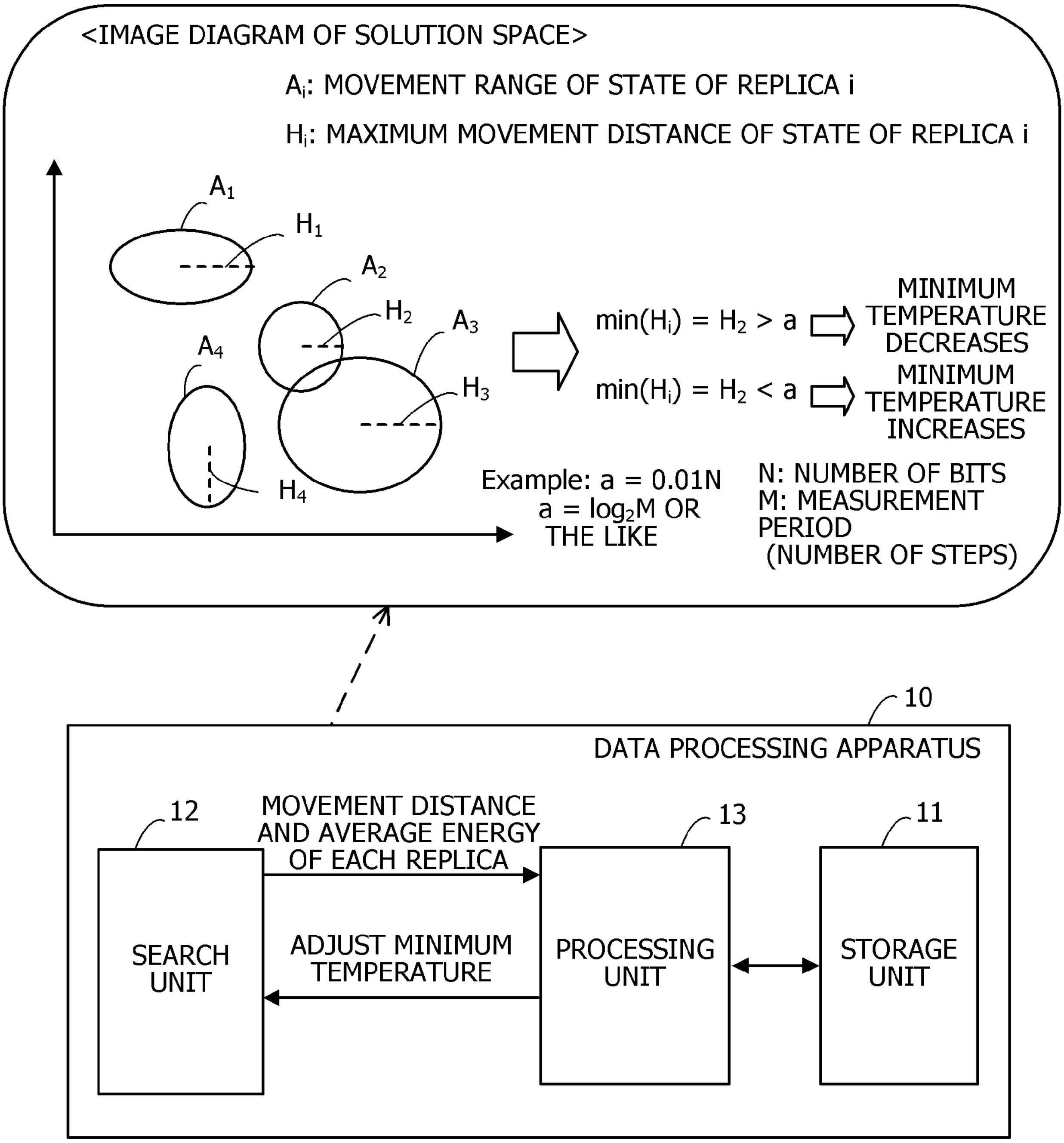
<IMAGE DIAGRAM OF SOLUTION SPACE>
$A_i$: MOVEMENT RANGE OF STATE OF REPLICA i
$H_i$: MAXIMUM MOVEMENT DISTANCE OF STATE OF REPLICA i
$A_1$
$H_1$
$A_2$
$H_2$
$A_3$
$H_3$
$A_4$
$H_4$
$\min(H_i) = H_2 > a$
MINIMUM TEMPERATURE DECREASES
$\min(H_i) = H_2 < a$
MINIMUM TEMPERATURE INCREASES
Example: $a = 0.01N$
$a = \log_2 M$ OR THE LIKE
N: NUMBER OF BITS
M: MEASUREMENT PERIOD (NUMBER OF STEPS)
10
DATA PROCESSING APPARATUS
12
MOVEMENT DISTANCE AND AVERAGE ENERGY OF EACH REPLICA
13
11
SEARCH UNIT
ADJUST MINIMUM TEMPERATURE
PROCESSING UNIT
STORAGE UNIT

FIG. 2

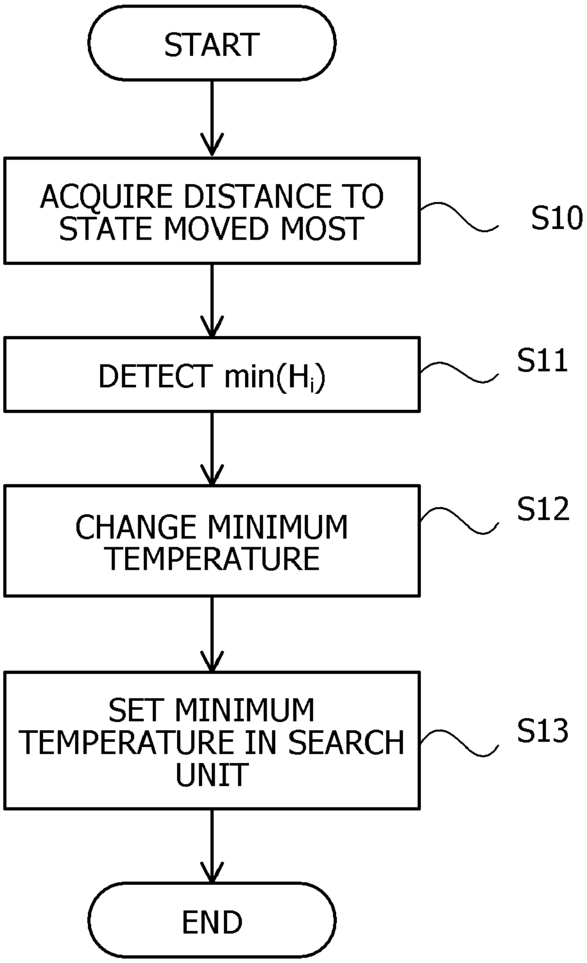
START
ACQUIRE DISTANCE TO STATE MOVED MOST
S10
DETECT min($H_i$)
S11
CHANGE MINIMUM TEMPERATURE
S12
SET MINIMUM TEMPERATURE IN SEARCH UNIT
S13
END

FIG. 3

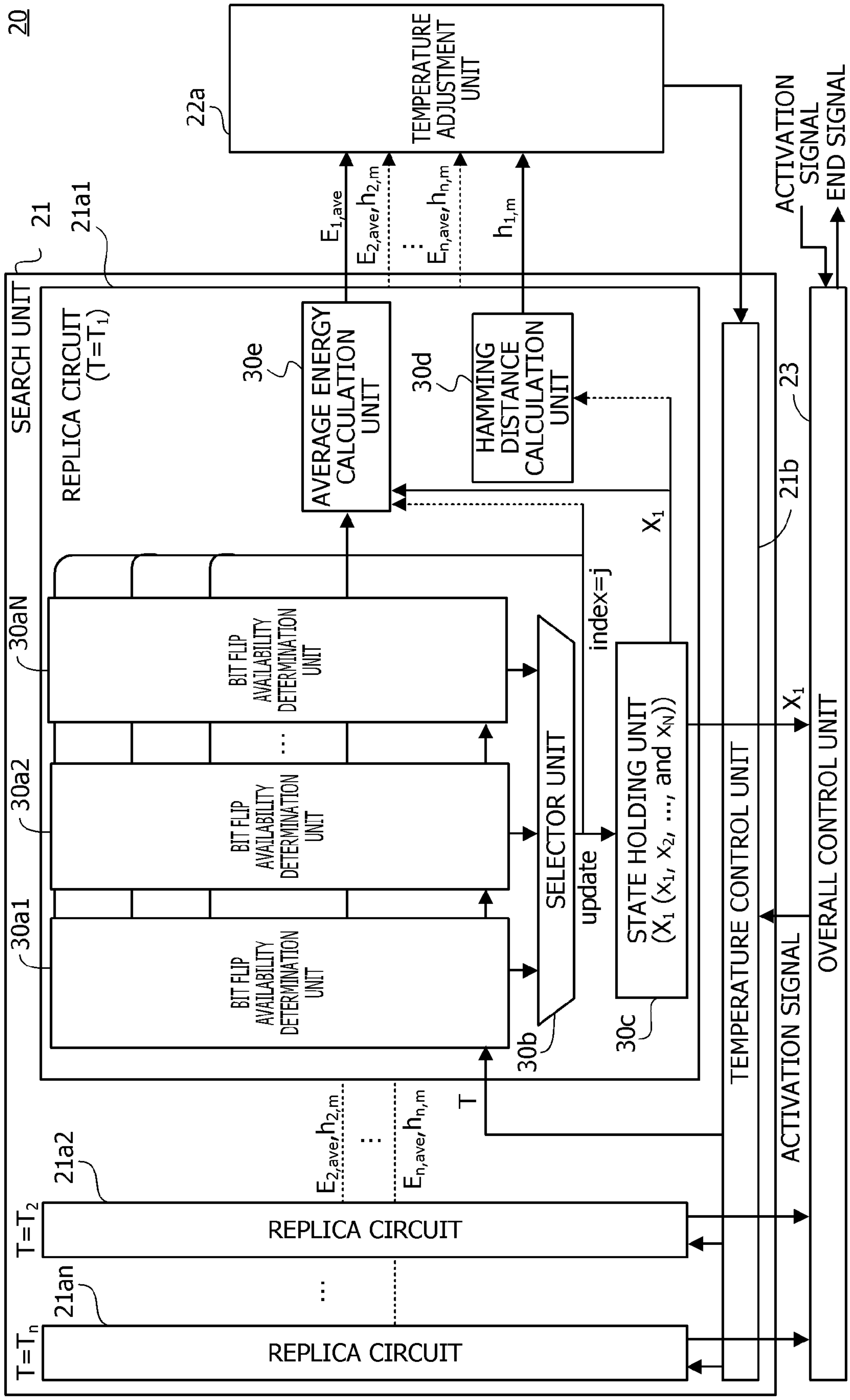

20
22a
TEMPERATURE ADJUSTMENT UNIT
21
21a1
SEARCH UNIT
REPLICA CIRCUIT (T=T1)
30e
AVERAGE ENERGY CALCULATION UNIT
30d
HAMMING DISTANCE CALCULATION UNIT
E1,ave
E2,ave,h2,m
En,ave,hn,m
h1,m
30aN
30a2
30a1
BIT FLIP AVAILABILITY DETERMINATION UNIT
BIT FLIP AVAILABILITY DETERMINATION UNIT
BIT FLIP AVAILABILITY DETERMINATION UNIT
SELECTOR UNIT
30b
index=j
update
X1
STATE HOLDING UNIT (X1 (x1, x2, ..., and xN))
30c
21b
TEMPERATURE CONTROL UNIT
ACTIVATION SIGNAL
23
OVERALL CONTROL UNIT
ACTIVATION SIGNAL
END SIGNAL
T
21a2
T=T2
REPLICA CIRCUIT
21an
T=Tn
REPLICA CIRCUIT

FIG. 4

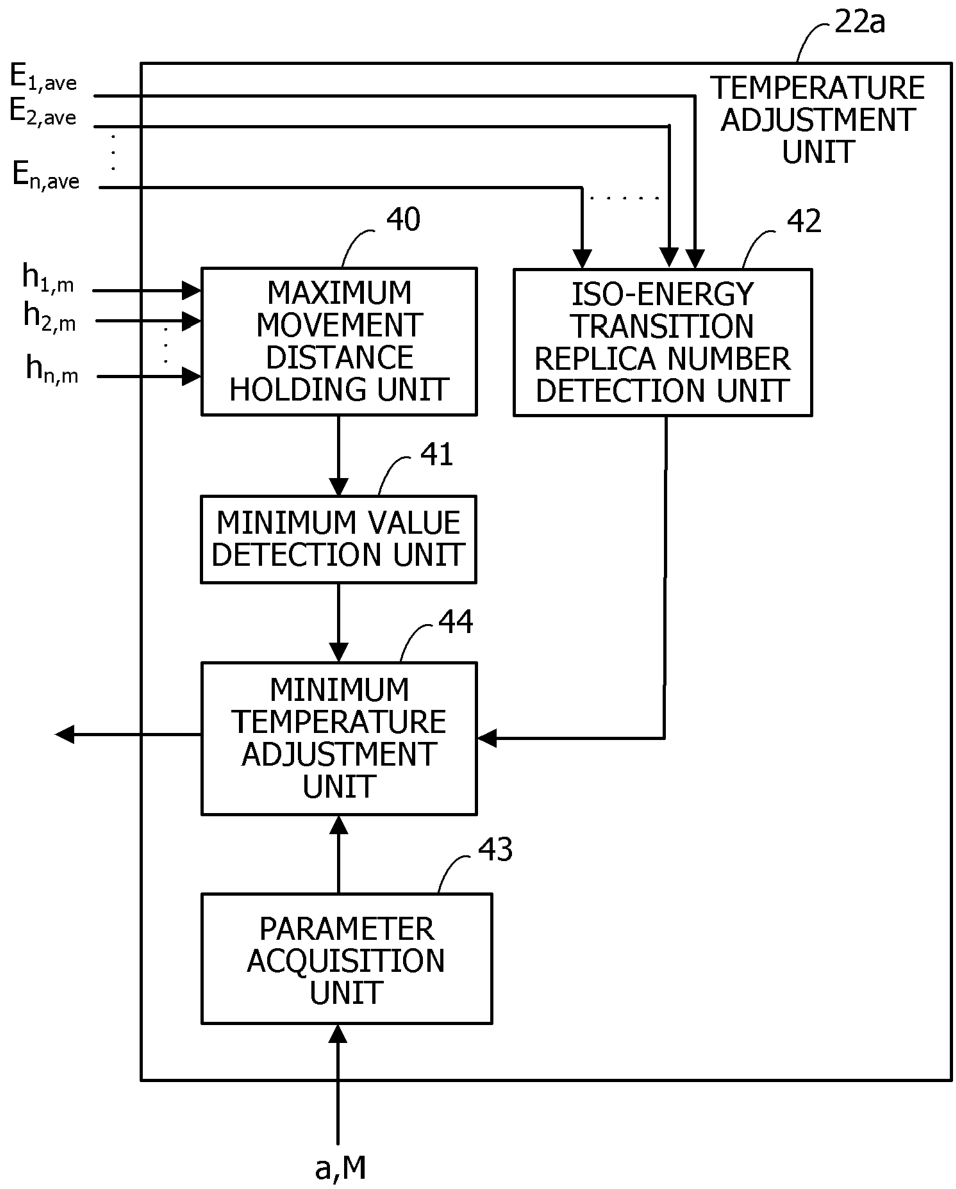
22a
TEMPERATURE ADJUSTMENT UNIT
E1,ave
E2,ave
En,ave
h1,m
h2,m
hn,m
40
MAXIMUM MOVEMENT DISTANCE HOLDING UNIT
42
ISO-ENERGY TRANSITION REPLICA NUMBER DETECTION UNIT
41
MINIMUM VALUE DETECTION UNIT
44
MINIMUM TEMPERATURE ADJUSTMENT UNIT
43
PARAMETER ACQUISITION UNIT
a,M

FIG. 5

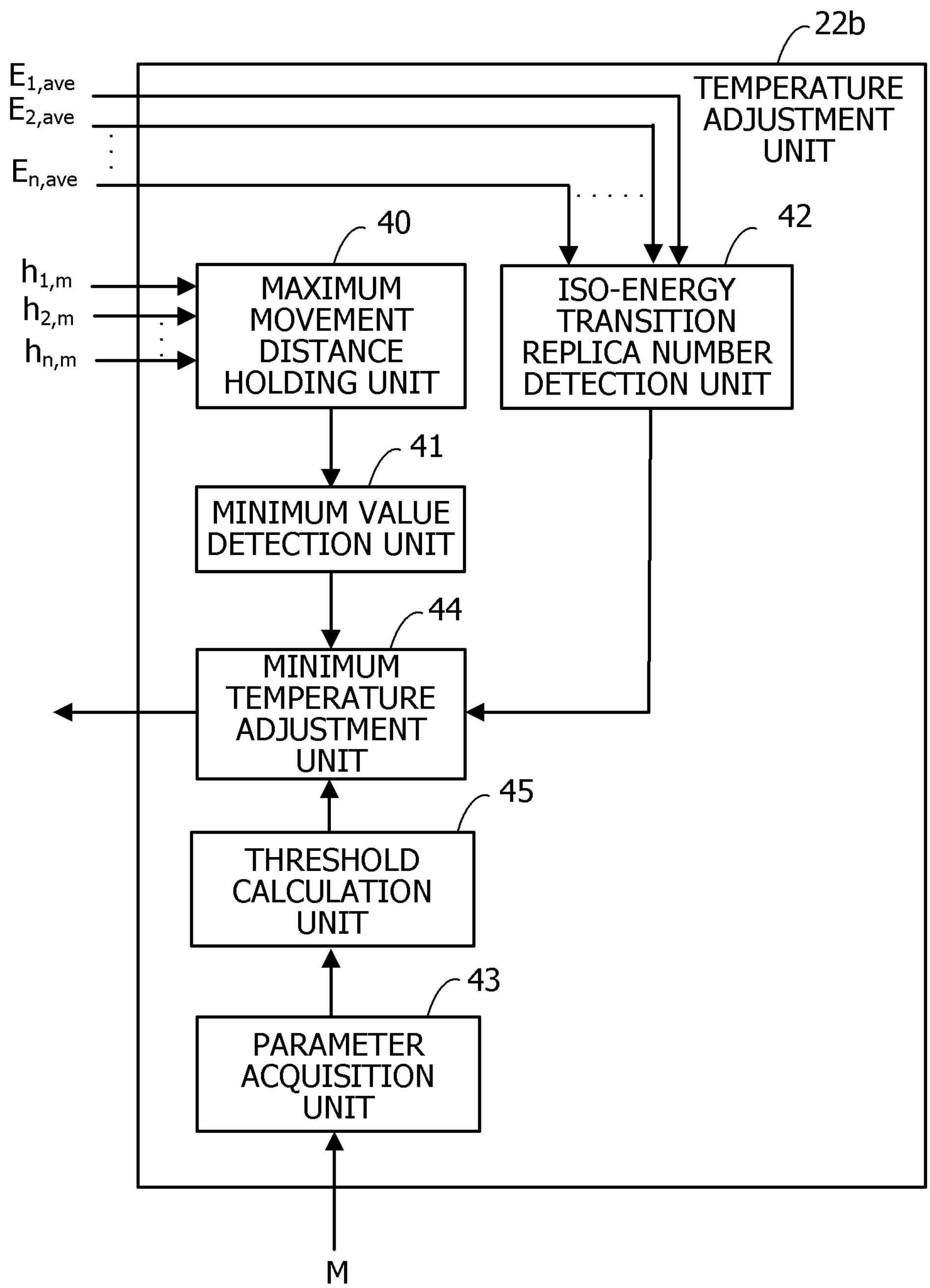

22b
TEMPERATURE ADJUSTMENT UNIT
$E_{1,ave}$
$E_{2,ave}$
$E_{n,ave}$
$h_{1,m}$
$h_{2,m}$
$h_{n,m}$
40
MAXIMUM MOVEMENT DISTANCE HOLDING UNIT
42
ISO-ENERGY TRANSITION REPLICA NUMBER DETECTION UNIT
41
MINIMUM VALUE DETECTION UNIT
44
MINIMUM TEMPERATURE ADJUSTMENT UNIT
45
THRESHOLD CALCULATION UNIT
43
PARAMETER ACQUISITION UNIT
M

FIG. 6

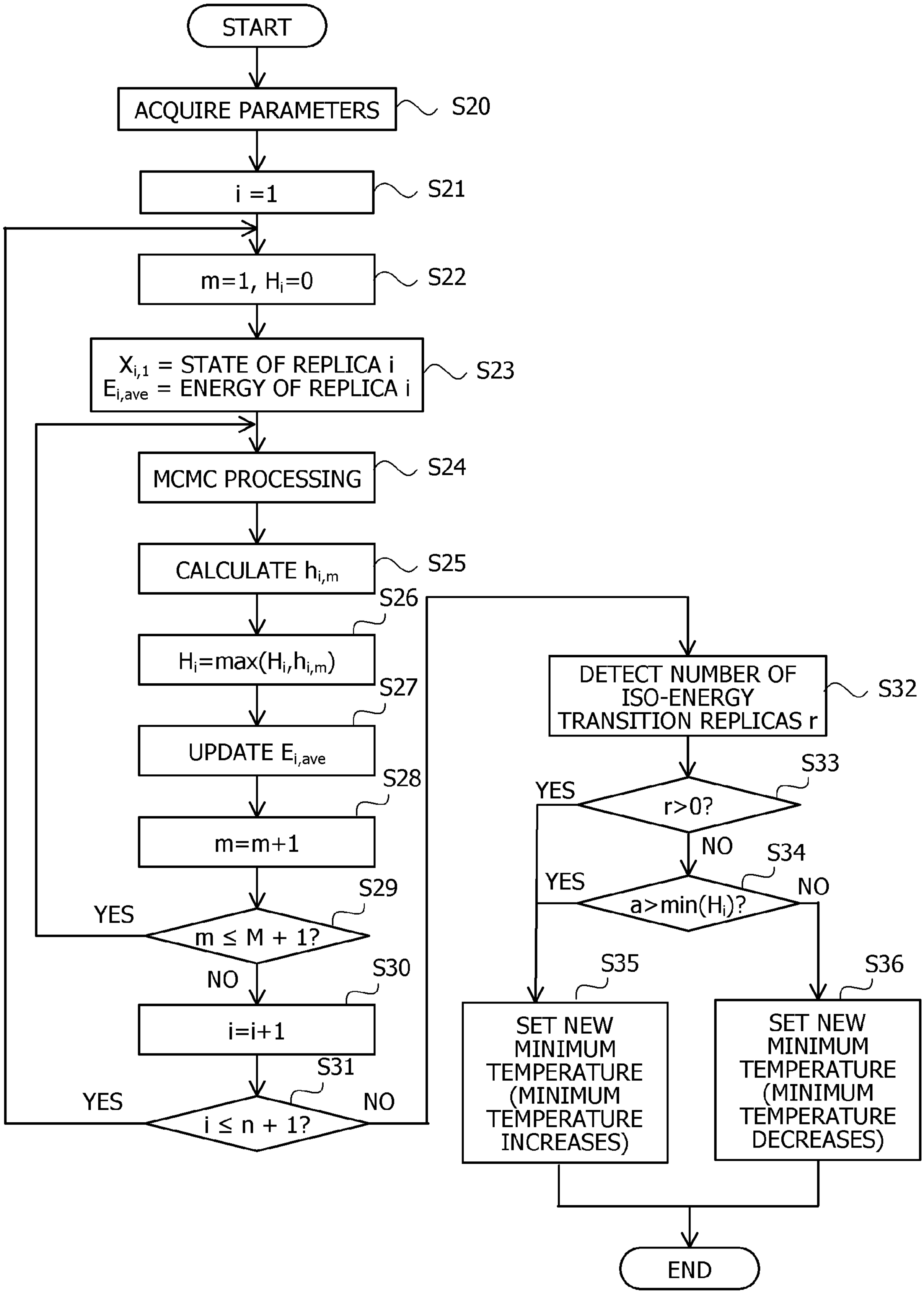
START
ACQUIRE PARAMETERS
S20
i =1
S21
m=1, Hi=0
S22
Xi,1 = STATE OF REPLICA i
Ei,ave = ENERGY OF REPLICA i
S23
MCMC PROCESSING
S24
CALCULATE hi,m
S25
S26
Hi=max(Hi,hi,m)
S27
UPDATE Ei,ave
S28
m=m+1
S29
YES
m ≤ M + 1?
NO
S30
i=i+1
S31
YES
i ≤ n + 1?
NO
DETECT NUMBER OF ISO-ENERGY TRANSITION REPLICAS r
S32
S33
YES
r>0?
NO
S34
YES
a>min(Hi)?
NO
S35
SET NEW MINIMUM TEMPERATURE (MINIMUM TEMPERATURE INCREASES)
S36
SET NEW MINIMUM TEMPERATURE (MINIMUM TEMPERATURE DECREASES)
END

FIG. 7

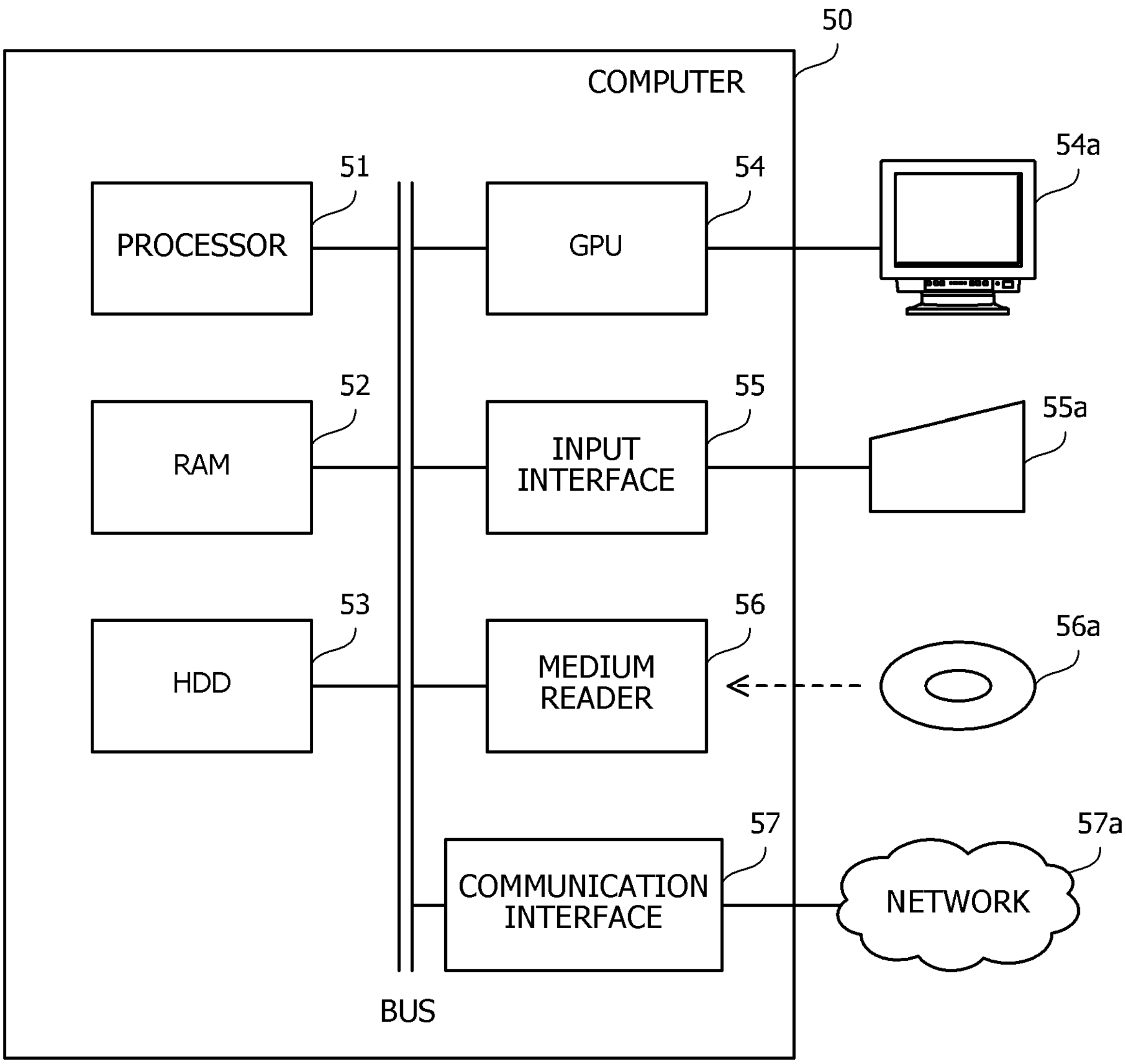
50
COMPUTER
51
PROCESSOR
52
RAM
53
HDD
54
GPU
55
INPUT INTERFACE
56
MEDIUM READER
57
COMMUNICATION INTERFACE
BUS
54a
55a
56a
57a
NETWORK

Europäisches Patentamt
European Patent Office
Office européen des brevets

# EUROPEAN SEARCH REPORT

Application Number
EP 23 16 8693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/072711 A1 (KUSHIBE DAISUKE [JP]) 11 March 2021 (2021-03-11)<br>* paragraph [0031] - paragraph [0077] *<br>* figures 1-4 *<br>----- | 1-12 | INV.<br>G06N10/60 |
| | | | TECHNICAL FIELDS SEARCHED (IPC) |
| | | | G06N |

The present search report has been drawn up for all claims

1

| Place of search | Date of completion of the search | Examiner |
|---|---|---|
| The Hague | 29 January 2024 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 16 8693

This annex lists the patent family members relating to the patent documents cited in the above-mentioned European search report. The members are as contained in the European Patent Office EDP file on
The European Patent Office is in no way liable for these particulars which are merely given for the purpose of information.

29-01-2024

| Patent document cited in search report | Publication date | Patent family member(s) | Publication date |
|---|---|---|---|
| US 2021072711 A1 | 11-03-2021 | JP 7323796 B2 | 09-08-2023 |
| | | JP 2021043503 A | 18-03-2021 |
| | | US 2021072711 A1 | 11-03-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021043503 A
- JP 2020181461 A